# EUROPEAN PATENT APPLICATION

(11) **EP 4 790 563 A1**
(43) Date of publication of application: **12.08.2026**
(21) Application number: 25156664.2
(22) Date of filing: 07.02.2025
(51) Int. Cl.: G06F 13/42

(54) **DEVICE, SYSTEM, AND METHOD FOR AUDIO TRANSMISSION**

(71) Applicant: BANG & OLUFSEN A/S, 7600 Struer (DK)
(72) Inventor: Haunstrup, René, 7600 Struer (DK)
(74) Representative: AWA Denmark A/S

(57) **Abstract**

Disclosed is an audio device (1) comprising, an Universal Serial Bus Type-C, USB-C, connector (30) comprising at least one pair of signal transmitting pins (22) and at least one pair of signal receiving pins (21), an audio transmit-receive device (10) for audio bus communication, the audio transmit-receive device (10) being in a master mode or in a slave mode. Further disclosed is a system comprising a plurality of audio devices (1), and a method (100) of transmitting and receiving audio between a plurality of such audio devices.

## Description

### Field of the invention

The invention relates to the field of audio transmission on Universal Serial Bus.

### Background

USB (Universal Serial Bus) is a widely used interface for connecting devices together, allowing data transfer, power transfer, and device communication through a standardized connector and protocol. Recently, USB Type-C, commonly referred to as USB-C, has become a commonly used receptacle for communication and data and power transfer.

When transferring audio data between devices over USB, USB-Audio is a commonly used protocol. USB-Audio is generally a protocol built on top of the normal USB interface aiming to connect audio devices, such as headphones, microphones, soundcards, etc. to a host such as a PC, laptop or mobile phone.

However, a limitation of using USB-Audio is that it requires a complex microprocessor with a sophisticated software stack running on the audio device. In addition to this, USB-Audio is prone to drift, jitter, wander or indeterministic latencies, which deteriorates the listening experience of a user or typically requires complex and resource-heavy recovery mechanisms for communication with USB-Audio.

### Summary

It remains a desire to provide an audio device overcoming at least some of the mentioned drawbacks of the prior art.

A first aspect of this disclosure relates to an audio device, comprising,
a Universal Serial Bus Type-C, USB-C, connector comprising at least one pair of signal transmitting pins and at least one pair of signal receiving pins,
an audio transmit-receive device for audio bus communication, the audio transmit-receive device being in a master mode or in a slave mode, wherein the audio transmit-receive device, if in the master mode, is configured to
receive an audio signal for playback;
transmit, via a pair of master pins of the audio transmit-receive device, a bus initiation signal to initiate an audio bus for transmitting and receiving digital signals comprising audio data, and, optionally, control data via the pair of master pins;
transmit and receive, via the audio bus and the pair of master pins, digital signals comprising audio data and, optionally, control data; and
periodically transmit with a predetermined period, via the pair of master pins, a downstream synchronisation control frame, and periodically receive with the predetermined period, via the pair of master pins, an upstream synchronisation response frame,

and wherein the audio transmit-receive device, if in the slave mode, is configured to
   receive, via a pair of slave pins of the audio transmit-receive device, a bus initiation signal to initiate an audio bus for transmitting and receiving digital signals comprising audio data, and, optionally, control data via the pair of slave pins;
   transmit and receive, via the audio bus and the pair of slave pins, digital signals comprising audio data and, optionally, control data; and
   periodically receive with a predetermined period, via the pair of slave pins, a downstream synchronisation control frame, and periodically transmit with the predetermined period, via the pair of slave pins, an upstream synchronisation response frame,
the audio device further comprising a control device operably connected to the USB-C connector and the audio transmit-receive device,
wherein the control device is configured to, in response to determining that the audio transmit-receive device is in the master mode, connect a pair of the at least one pair of signal transmitting pins of the USB-C connector to the pair of master pins of the audio transmit-receive device, and/or in response to determining that the audio transmit-receive device is in the slave mode, connect a pair of the at least one pair of signal receiving pins of the USB-C connector to the pair of slave pins of the audio transmit-receive device, respectively.

It has been realised that by providing the audio transmit-receive device in the master and slave modes and connecting the respective pins thereof to the pins of the USB-C connector, low and deterministic latency and/or a reduced amount of jitter may be provided by the periodic transmission of synchronisation control and response frames while maintaining connection via the USB-C connector. This, in turn, provides an improved audio transmission, reducing the computational complexity necessary for recovery mechanisms for, e.g., clock recovery, while allowing for a single connector, i.e. the USB-C connector, providing the required signalling to and from the audio device, for instance including power supply signals. Notably where a larger playback system is provided comprising one audio transmit-receive device in master mode and a plurality of audio transmit-receive devices in slave mode, a reduced amount of jitter and drifting as well as a less complex recovery mechanism therefor may be provided, in turn allowing for an improved audio transmission between such audio transmit-receive devices.

The pair of master pins of the audio transmit-receive device may be the same as the pair of slave pins of the audio transmit-receive device, thereby advantageously reducing the hardware components of the audio device.

Alternatively, the pair of master pins of the audio transmit-receive device may be different from the pair of slave pins of the audio transmit-receive device, thereby reducing computational complication at the audio transmit-receive device.

The term "master device" or "master audio device" may be used to denote an audio transmit-receive device in the master mode and the term "slave device" or "slave audio device" may be used to denote an audio transmit-device in the slave mode.

Throughout the present specification, it will be appreciated that the term "downstream" generally refers to communication and/or data sent from a master audio device towards one or more slave audio devices, whereas "upstream" generally refers to communication and/or data sent from the slave audio device(s) towards the master audio device or slave audio device residing closer to the master audio device. By "closer to the master" may herein be referred to when seen along a signalling path of the digital signal, e.g. so that a slave audio device closer to the master audio device is a slave audio device interposed in the signalling path between the master audio device and a further slave audio device.

The control device may establish connection between the pins of the USB-C connector and the audio transmit-receive device by reducing the electric impedance between the pairs of pins. Alternatively or additionally, the control device may be configured to establish the connection between the pins of the USB-C connector and the audio device by providing a galvanic contact between the respective pair of pins and/or by providing an electrically conducting connection via circuitry configured to selectively provide a connection between the pins of the USB-C connector and the master and/or slave pins of the audio device. Such circuitry may be or comprise a transistor, such as a Field-effect transistor (FET), and/or solid-state switches controllable by the control device.

It will be appreciated that a "connection" in the present specification refers to an electrically conducting connection. The signals referred to in the present specification, including the bus initiation signal, may be digital signals and/or may have values in a voltage range of 0 - 15 V, such as 0 - 5 V volts, such as 0 - 3.3 V, such as 0 - 1.8 V. Correspondingly, an electrically conducting connection may be an electrically conducting connection for signals in the signal range of 0 - 15 V, such as 0 - 5 V, such as 0 - 3.3 V, such as 0 - 1.8 V. A such electrically conducting connection may be a low-resistance and/or low impedance connection, preferably having an impedance of less than 10 Ω, such as less than 5 Ω, such as less than 1 Ω, such as less than 500 mΩ between the pins of the USB-C connector and the master and/or slave pins, respectively.

The predetermined period may be between 1 ms and 10 s.

Thereby a device is provided which allows to transmit or receive audio signals over a USB-C cable in a controlled manner, reducing drift, jitter, wander, or indeterministic latencies, as the audio signal can be reconstructed at a receiving unit. Another advantage may be that multichannel audio signals can be transmitted in a way that allows for precise reconstructing of signals, and transmittal to further destinations with minimal quality losses.

The downstream synchronisation control frame may comprise a sending time indicative of the time at which the downstream synchronisation control frame was sent.

In some embodiments, the downstream synchronisation control frame may be transmitted, if the audio transmit-receive device is in the master mode, and/or received, if the audio transmit-receive device is in the slave mode, along with at least one downstream data slot, optionally carrying downstream data. For instance, if the audio transmit-receive device is in the master mode, the audio transmit-receive device may be configured to periodically transmit with the predetermined period, via the pair of master pins, the downstream synchronisation control frame and at least one downstream data slot. Alternatively or additionally, if the audio transmit-receive device is in the slave mode, the audio transmit-receive device may be configured to periodically receive with the predetermined period, via the pair of slave pins, the downstream synchronisation control frame and at least one downstream data slot.

The upstream synchronisation response frame may comprise a response time indicative of the time at which the upstream synchronisation response frame was sent.

In some embodiments, the upstream synchronisation control frame may be received, if the audio transmit-receive device is in the master mode, and/or transmitted, if the audio transmit-receive device is in the slave mode, along with at least one downstream data slot, optionally carrying downstream data. For instance, if the audio transmit-receive device is in the master mode, the audio transmit-receive device may be configured to periodically transmit with the predetermined period, via the pair of master pins, the downstream synchronisation control frame and at least one downstream data slot. Alternatively or additionally, if the audio transmit-receive device is in the slave mode, the audio transmit-receive device may be configured to periodically receive with the predetermined period, via the pair of slave pins, the downstream synchronisation control frame and at least one downstream data slot.

The downstream synchronisation control frame may comprise a clock signal or clock synchronisation signal, optionally, in a header or preamble of the downstream synchronisation control frame. A clock synchronisation signal, optionally in a preamble of the downstream synchronisation control frame, is configured to cause downstream slave devices, i.e. devices in the slave mode, to synchronise and generate a phase aligned master clock. The clock synchronisation signal may be provided as one or more synchronisation bits. Thereby, a temporal synchronisation of the master and slave audio devices may be obtained.

The downstream synchronisation control frame, the upstream synchronisation response frame and/or the at least one downstream or upstream slots, respectively, may comprise data, such as control data and/or audio data, transmitted in known manners, including as Inter-Integrated Circuit (I²C) data, Inter-Integrated Circuit Sound (I²S) data, Serial Peripheral Interface (SPI) data, Phase Division Multiplexed (PDM) data, Time Division Multiplexed (TDM) data, ethernet data, or the like. The downstream synchronisation control frame, the upstream synchronisation response frame and/or the at least one downstream or upstream slots thereof, respectively, may comprise synchronisation and/or control data for providing communication between any of master and slave devices.

Control data may throughout the present specification, comprise data containing or indicating information about the audio data, the communication bus, and/or audio devices, such as audio transmit-receive devices thereof, in an audio environment, in which the audio device is arranged or forms part of. For instance, such control data may indicate one or more of an audio format of the audio data, a sample rate, a number of audio channels or objects, or the like.

Audio data may generally be transmitted, e.g. between any of master and slave devices, in any known manner of transmitting audio data including as, for instance, Pulse Code Modulated (PCM) data, Inter-Integrated Circuit Sound (I²S) data, Phase Division Multiplexed (PDM) data, Time Division Multiplexed (TDM) data, or the like.

The audio transmit-receive device may be configured to transmit and receive the digital signals via a respective single wire pair, such as a single twisted-pair wire.

Thereby only two wires are necessary reducing the costs and/or weight of a system using the audio transmit-receive device.

The audio transmit-receive device may be an Automotive Audio Bus, A2B, transceiver.

Thus, the audio device may communicate with other A2B transceivers and integrate itself in existing A2B networks. In particular, utilising A2B may allow for a deterministic latency while providing a reduced computational effort.

The audio data may be transmitted in accordance with the A2B standard. The upstream synchronisation response frame, similarly, the downstream synchronisation control frame, the upstream synchronisation response frame and/or the at least one downstream or upstream slots thereof, respectively, may be provided in accordance with the A2B standard.

In some examples, the control device may comprise
a USB-C port controller, and
a signal switching unit operably connected to the pair of pins of the audio transmit-receive device and to the at least one pair of signal transmitting pins and the at least one pair of signal receiving pins, wherein
the USB-C port controller is operably connected to the signal switching unit and the USB-C connector and is configured to control signalling through the USB-C connector, wherein the USB-C port controller is further configured to receive a signal indicating that the audio transmit-receive device is in the master mode or in the slave mode and, in response to receiving a signal indicating that the audio transmit-receive device is in the master mode, cause the signal switching unit to connect the pair of master pins of the audio transmit-receive device to a pair of pins of the at least one pair of signal transmitting pins of the of the USB-C connector and/or, in response to receiving a signal indicating that the audio transmit-receive device is in the slave mode, cause the signal switching unit to connect the pair of slave pins of the audio transmit-receive device to a pair of pins of the at least one pair of signal receiving pins of the of the USB-C connector.

Thereby, the audio transmit-receive device may be able to switch role from slave to master or vice versa. This may increase the flexibility of usage of the audio device. For example, the audio device may act as a loudspeaker receiving audio signals, and then switch to sending audio signals to a second device which then may play these audio signals.

The signal switching unit may be operably connected to the pair of master pins, when the audio transmit-receive device is in the master mode, and/or may be operably connected to the pair of slave pins, when the audio transmit-receive device is in the slave mode. Alternatively or additionally, the signal switching unit may be operably connected to the pair of master pins and to the pair of slave pins of the audio transmit-receive device.

The signal switching unit may comprise a semiconductor-based circuit, such as a semiconductor switch, a transistor-based circuit, a relay, and/or a solid-state relay to connect the pair of master and/or slave pins to the respective pair of signal receiving and/or transmitting pins, respectively, of the USB-C connector.

The USB-C port controller may be operably connected to the signal switching via a further processing device, such as a host processor, optionally being configured to handle negotiation of mode selection and cable orientation and/or initialization of a communication protocol.

The signal receiving pins may be referred to and/or denoted RX pins. A pair, such as a first pair, of signal receiving pins may comprise a first signal receiving pin, RX1+, and a second signal receiving pin, RX1-.

The signal transmitting pins may be referred to and/or denoted TX pins. A pair, such as a first pair, of signal transmitting pins may comprise a first signal transmitting pin, TX1+, and a second signal transmitting pin, TX1-.

While the term "signal receiving pins" and "signal transmitting pins" are used in the present specification, it will be appreciated that bidirectional communication may take place on the respective pair of pins. I.e., a pair of "signal receiving pins", such as RX1+ and RX1-, may allow for or provide bidirectional communication, and/or a pair of "signal transmitting pins", such as TX1+ and TX1-, may allow for or provide bidirectional communication.

It will be appreciated that USB-C port controllers are generally well-known in the art and will not be described further in the present specification.

The at least one pair of signal receiving pins may comprise a first pair of signal receiving pins and a second pair of signal receiving pins, and wherein the at least one pair of signal transmitting pins comprises a first pair of signal transmitting pins and a second pair of signal transmitting pins, wherein
the USB-C connector controller is configured to, in response to detecting a connection to a further device via the USB-C connector, determine an orientation of the USB-C connector connection, the orientation comprising a first and a second orientation, wherein the USB-C connector controller is further configured to:
in response to determining the first orientation, cause the signal switching unit to connect the pair of master pins of the audio transmit-receive device to the first pair of signal transmitting pins, in response to receiving a signal indicating that the audio transmit-receive device is in the master mode, and/or connect the pair of slave pins of the audio transmit-receive device to the first pair of signal receiving pins, in response to receiving a signal indicating that the audio transmit-receive device is in the slave mode, and
in response to determining the second orientation, cause the signal switching unit to connect the pair of master pins of the audio transmit-receive device to the second pair of signal transmitting pins in response to receiving a signal indicating that the audio transmit-receive device is in the master mode, and/or connect the pair of master pins of the audio transmit-receive device to the second pair of signal receiving pins in response to receiving a signal indicating that the audio transmit-receive device is in the slave mode.

Thereby both possible orientations of a connected USB-C plug may be utilised, and it does not require a user to take care of the orientation of the USB-C plug, in turn allowing for a more robust audio transmission.

The second pair of signal receiving pins may comprise a third signal receiving pin, RX2+, and a fourth signal receiving pin, RX2-.

The second pair of signal transmitting pins may comprise a third signal transmitting pin, TX2+, and a fourth signal transmitting pin, TX2-.

The second pairs of signal receiving and transmitting pins may comprise any feature described with respect to the first pairs of signal receiving and transmitting pins, respectively. The second pair of signal receiving pins may be similar or identical to the first pair of signal receiving pins, except for their physical location in the USB-C connector. The second pair of signal transmitting pins may be similar or identical to the first pair of signal transmitting pins, except for their physical location in the USB-C connector.

The USB-C connector controller may be further configured, in response to determining that no audio is to be transmitted and received by the audio transmit-receive device, cause the signal switching unit to set the pins of the audio transmit-receive device and/or the pins of the USB-C connector to a high impedance, Hi-Z, state.

Furthermore, the USB-C connector may be used for other communication when no audio is to be transmitted, thereby allowing other types of communication to other elements of the audio device via the signal transmitting and receiving pins, respectively. Moreover, the risk of non-compatibility where the USB-C connector is used for other communication and/or for communication of the audio device with non-supported devices, i.e. devices not having a corresponding audio transmit-receive device, via the USB-C connector is reduced, in turn providing increased flexibility and reducing the risk of damaging the audio device or another device connected thereto via the USB-C connector

The USB-C connector may receive a no-audio signal from the audio transmit-receive device and determine based on that signal that no audio is to be transmitted. The audio device may determine that audio is to be transmitted and/or received and comprises determining that a further device is connected to the audio device via the USB-C connector and transmitting and/or receiving a handshake signal, indicating that audio is to be transmitted and/or received, via the USB-C connector.

Thereby a readiness of the devices is ensured for an increase in reliable communication between the devices. In particular, audio data as well as the periodical communication will only be provided where a further device is connected via the USB-C connector.

The handshake signal may be or comprise a vendor defined message (VDM) and/or a corresponding acknowledgment signal of the VDM. Alternatively or additionally, the handshake signal may be or comprise a mode discovery signal. A such mode discovery signal may indicate a supported mode of the USB connection of the audio device.

The control device, such as a connector controller thereof, may be configured to, in response to determining that audio is to be transmitted and/or received, operate in a USB-C Alternate Mode, Alt-Mode.

This may allow to deviate from using common USB-C signals and improves the synchronization of the audio signals, for example, a computational cost of the signal may be reduced. Thereby, common USB signals may be transmitted via the USB-C connector in instances where the audio transmit-receive device does not transmit or receive audio.

USB-C Alternate Mode remains a well-known term and mode and, thus, will not be elaborated further in the present specification.

The audio device may be any one of an audio playback device, such as a loudspeaker device, an audio streamer device, a television, and an audio interface.

The audio device may alternatively or additionally be or comprise a microphone. An audio interface may be any type of audio interface, such as or including a Digital-Analog Converter (DAC), an Analog-Digital Converter (ADC), an amplifier, or the like.

Thereby the audio signal may be directly used by the device, and less additional devices are required to listen to or record sound.

The audio device may be configured, via the USB-C connector, to receive a power signal, providing power supply for operation of the audio device.

Thus, the operation of the audio device may be supported with only one cable, providing audio signals and power, effectively simplifying operation of the audio device.

Alternatively, or additionally the audio device may receive power from a comprised battery, or a dedicated power supply cable.

A second aspect of the present disclosure relates to a system comprising a plurality of audio devices according to the first aspect, the plurality of audio devices comprising a first audio device and at least one second audio device,
wherein the at least one first audio device and the at least one second audio device are connected via the respective USB-C connectors thereof, and
wherein the audio transmit-receive device of the first audio device is configured to operate in the master mode and wherein the audio transmit-receive device of the at least one second audio device is configured to operate in the slave mode.

Thus, the system may provide an easy to establish audio system capable of transmitting audio between the two devices while reducing drift, jitter, wander, or indeterministic latencies.

It will be appreciated that any feature or effect described with respect to the audio device according to the first aspect may equally apply to the system according to the second aspect.

In some embodiments, the plurality of second audio devices may be serially connected. One second audio device of the plurality of second audio devices may be directly connected to the first audio devices. The remaining audio devices of the plurality of second audio devices may be connected to the first audio device via another or other second audio device(s), optionally in a serial manner.

A third aspect relates to a method of transmitting and receiving audio between a plurality of audio devices according to the first aspect:
connecting a first audio device of the plurality of audio devices to a second audio device of the plurality of audio devices via the respective USB-C connectors thereof;
determining, by the control device of the first audio device, that the audio/transmit receive device of the first audio device is in the master mode;
connecting, by the control device of the first audio device, a pair of master pins of the audio transmit-receive device of the first audio device to a pair of the at least one pair of signal transmitting pins of the USB-C connector of the first audio device;
determining, by the control device of the second audio device, that the audio transmit-receive device of the second audio device is in the slave mode;
connecting, by the control device of the second audio device, a pair of slave pins of the audio transmit-receive device of the second audio device to a pair of the at least one pair of signal receiving pins of the USB-C connector of the second audio device;
receiving, by the audio transmit-receive device of the first audio device, an audio signal for playback;
transmitting, by the audio transmit-receive device of the first audio device, via the pair of master pins of the audio transmit-receive device, a bus initiation signal to initiate an audio bus for transmitting and receiving digital signals comprising audio data and, optionally, control data via the pair of master pins of the audio transmit-receive device of the first audio device; and
receiving, by the audio transmit-receive device of the second audio device via the pair of slave pins of the audio transmit-receive device, the bus initiation signal to initiate an audio bus for transmitting and receiving digital signals comprising audio data and, optionally, control data via the pair of slave pins of the audio transmit-receive device of the second audio device;
transmitting and receiving, via the audio bus and the respective pairs of pins of the audio transmit-receive devices of the first and second audio devices, digital signals comprising audio data and, optionally, control data;
periodically transmitting, by the audio transmit-receive device of the first audio device via the pair of master pins, with a predetermined period, a downstream synchronisation control frame, and periodically receiving with the predetermined period, via the pair of master pins, an upstream synchronisation response frame; and
periodically receiving, by the audio transmit-receive device of the second audio device via the pair of slave pins, with the predetermined period, the downstream synchronisation control frame , and periodically transmitting with the predetermined period, via the pair of slave pins, the upstream synchronisation response frame.

Thereby a method is provided which allows to transmit or receive audio signals over a USB-C cable in a controlled manner, reducing drift, jitter, wander, or indeterministic latencies.

It will be appreciated that any feature or effect described with respect to the audio device according to the first aspect and/or with respect to the system according to the second aspect may equally apply to the method according to the third aspect.

The method may comprise periodically transmitting and receiving upstream and downstream data slots, respectively, along with the downstream synchronisation control frame and upstream synchronisation response frame.

For instance, the method may comprise transmitting, by the audio transmit-receive device of the first audio device via the pair of master pins, with a predetermined period, a downstream synchronisation control frame and at least one downstream data slot, and periodically receive with the predetermined period, via the pair of master pins, an upstream synchronisation response frame and at least one upstream data slot; and
periodically receiving, by the audio transmit-receive device of the second audio device via the pair of slave pins, with the predetermined period, the downstream synchronisation control frame and at least one downstream data slot, and periodically transmitting with the predetermined period, via the pair of slave pins, the upstream synchronisation response frame and at least one upstream data slot.

The step of connecting, by the control device of the first audio device, a pair of master pins of the audio transmit-receive device of the first audio device to a pair of the at least one pair of signal transmitting pins of the USB-C connector of the first audio device, may occur subsequent to the step of determining that the first device is in the master mode but prior to the steps of receiving and transmitting nay signals, including the bus-initiation signals, digital signals, the downstream synchronisation control frame and the upstream synchronisation response frame.

Alternatively of additionally, the step of connecting, by the control device of the second audio device, a pair of slave pins of the audio transmit-receive device of the second audio device to a pair of the at least one pair of signal receiving pins of the USB-C connector of the second audio device, may occur subsequent to the step of determining that the second device is in the slave mode but prior to the steps of receiving and transmitting nay signals, including the bus-initiation signals, digital signals, the downstream synchronisation control frame and the upstream synchronisation response frame.

The method may further comprise, prior to transmitting and receiving the digital signals, performing a handshake procedure comprising transmitting a handshake signal indicating that audio is to be transmitted and/or received and, in response to receiving the handshake signal, transmitting an acknowledgment signal indicating a confirmation that audio is to be transmitted and/or received.

Thus, the reliability of the method is improved, as the devices may perform the handshake when in a state ready to transmit and/or receive audio signals.

The handshake may be transmitted and/or received by the first audio device, and/or any one or more of the second audio devices.

The different aspects of the present invention can be implemented in different ways including an audio device, a system comprising a plurality of audio devices, and a method of transmitting and receiving audio between a plurality of audio devices as described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependent claims. Furthermore, it will be appreciated that embodiments described in connection with one of the aspects described herein may equally be applied to the other aspects.

### Brief description of drawings

In the following description embodiments of the invention will be described with reference to the drawings, in which
Fig. 1 shows a conceptual embodiment of an audio device with its components,
Fig. 2 shows a signalling diagram of a master and a slave,
Fig. 3 shows a flowchart of a method of transmitting and receiving audio,
Fig. 4 shows a first exemplary use of an audio device, and
Fig. 5 shows a second exemplary use of an audio device.

### Detailed Description

The present invention will now be described in more detail hereinafter with reference to the accompanying drawings, in which embodiments of the invention are shown. This invention may, however, be embodied in many different forms and should not be construed as limited to the embodiments set forth herein; rather, these exemplary embodiments are provided for thoroughness and completeness.

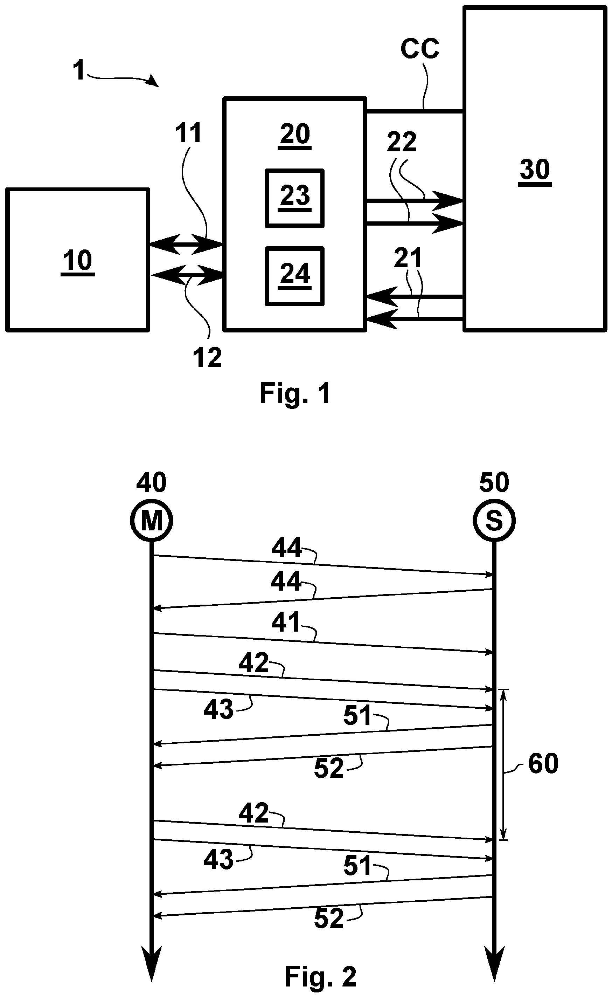

In Fig. 1 an audio device 1 of the first aspect is shown and it comprises a Universal Serial Bus Type-C, USB-C, connector 30 comprising at least one pair of signal transmitting pins 22 and at least one pair of signal receiving pins 21, such as for example two pairs of signal transmitting pins 22 and two pairs of signal receiving pins 21. The device further comprises an audio transmit-receive device 10 for audio bus communication. When the device is in a master mode a signal path may run from the audio transmit-receive device via a pair of master pins 11 to the control device 20 and from there to the USB-C connector via the signal transmitting pins 22. If the device is in the slave mode a signal path may run from the audio transmit-receive device via a pair of slave pins 12 to the control device 20 and from there to the USB-C connector via the signal receiving pins 21. The audio bus communication may be compatible with the automotive audio bus, A2B, protocol. The audio transmit-receive device 10 is able to adopt a master mode or a slave mode. Whether the audio transmit-receive device 10 adopts either one of these modes may depend on an input from a user prompting one of the two modes. Alternatively, or additionally, the audio transmit-receive device 10 may be configured from the production to adopt a mode as default and only deviate from that mode when receiving an input indicating that.

FIG. 2 shows an exemplary signal diagram depicting an exemplary communication between a master device 40 and a slave device 50 of a system comprising the master device 40 and the slave device 50 connected via the respective USB-C connectors thereof. The master device 40 is an audio device according to the present invention in the master mode, here exemplarily illustrated as an audio device 1 of the embodiment shown in FIG. 1 in the master mode, and the slave device 50 is another audio device according to the present invention in the slave mode, here exemplarily illustrated as another audio device 1 of the embodiment shown in FIG. 1 in the slave mode.

In the master mode the audio transmit-receive device 10 is configured to receive an audio signal, such as a digital audio signal for playback. To do so the audio transmit-receive device 10 transmits via a pair of master pins 11 a bus initiation signal 41 to initiate an audio bus. Prior to signal 41, there may be a step where a USB-C plug is inserted into the USB-C connector and via the USB-C port controller 24 and the channel configuration CC, USB capabilities are exchanged via USB capability exchange signals 44 and the signal switching unit 23 configured. This bus initiation signal 41 may be sent after the presence of an USB-C cable in the USB-C connector 30 has been registered. This audio bus is used for transmitting and receiving digital signals comprising audio data and control data. The audio bus communicates via the pair of master pins 11, which are further connected to a pair of signal transmitting pins 22 of the USB-C connector 30 via the control device 20. In the master mode the audio transmit-receive device 10 periodically transmits via the pair of master pins 11 a downstream synchronisation control frame 42 and at least one downstream data slot 43. The period 60 of the transmissions is predetermined. Further, the audio transmit-receive device 10 in the master mode is configured to receive periodically, via the pair of master pins 11, an upstream synchronisation response frame 51 and at least one upstream data slot 52.

In the slave mode the audio transmit-receive device 10 is configured to receive, via a pair of slave pins 12 of the audio transmit-receive device 10, a bus initiation signal 41 to initiate an audio bus for transmitting and receiving digital signals comprising audio data and control data via the pair of slave pins 12. The audio transmit-receive device 10 is further configured in the slave mode to transmit and receive, via the audio bus and the pair of slave pins 12, digital signals comprising audio data and control data, and periodically receive with a predetermined period 60, via the pair of slave pins 12, a downstream synchronisation control frame 42 and at least one downstream data slot 43, and periodically transmit with the predetermined period 60, via the pair of slave pins 12, an upstream synchronisation response frame 51 and at least one upstream data slot 52. The pair of slave pins 12 are connected via the control device 20 to the signal receiving pins 21 of the USB-C connector 30.

Fig. 2 shows a signal diagram depicting an exemplary communication between a master and a slave. At first the master sends a bus initiation signal 41 to the slave, after which the bus is considered established by the master, alternatively, the slave may confirm the established bus with a bus confirmation signal, not shown. After that the master proceeds to send downstream synchronisation control frame 42 with a predetermined period 60, shown on the slave side of the signal diagram. The slave transmits upstream synchronisation response frame 51 and upstream data slot 52 to the master.

The downstream synchronisation control frame 42, the at least one downstream data slot 43, the upstream synchronisation response frames 51 and the at least one upstream data slots 52, which are transmitted periodically, are each illustrated twice in FIG. 2. It will be appreciated that FIG. 2 illustrates a certain time period only. While the downstream synchronisation control frames 42 are illustrated with the same reference numeral, it will be appreciated that the two downstream synchronisation frames 42 may be similar or identical and/or have a similar structure, albeit with different data, for which reason they are illustrated identical in FIG. 2. In other embodiments, they may be different. This similarly applies to the two at least one downstream data slot 43, the two upstream synchronisation response frames 51, and the two at least one upstream data slots 52, which are each equally illustrated twice with the same reference numeral and may be similar or identical and/or have a similar structure, albeit with different data, or may be different.

The audio device 1 further comprises a control device 20 operably connected to the USB-C connector 30 and the audio transmit-receive device 10. The control device 20 is configured to, in response to determining that the audio transmit-receive device 10 is in the master mode, connect a pair of the at least one pair of signal transmitting pins 22 of the USB-C connector 30 to the pair of master pins 11 of the audio transmit-receive device 10, and/or in response to determining that the audio transmit-receive device 10 is in the slave mode, connect a pair of the at least one signal receiving pins 21 of the USB-C connector 30 to the pair of slave pins 12 of the audio transmit-receive device 10, respectively.

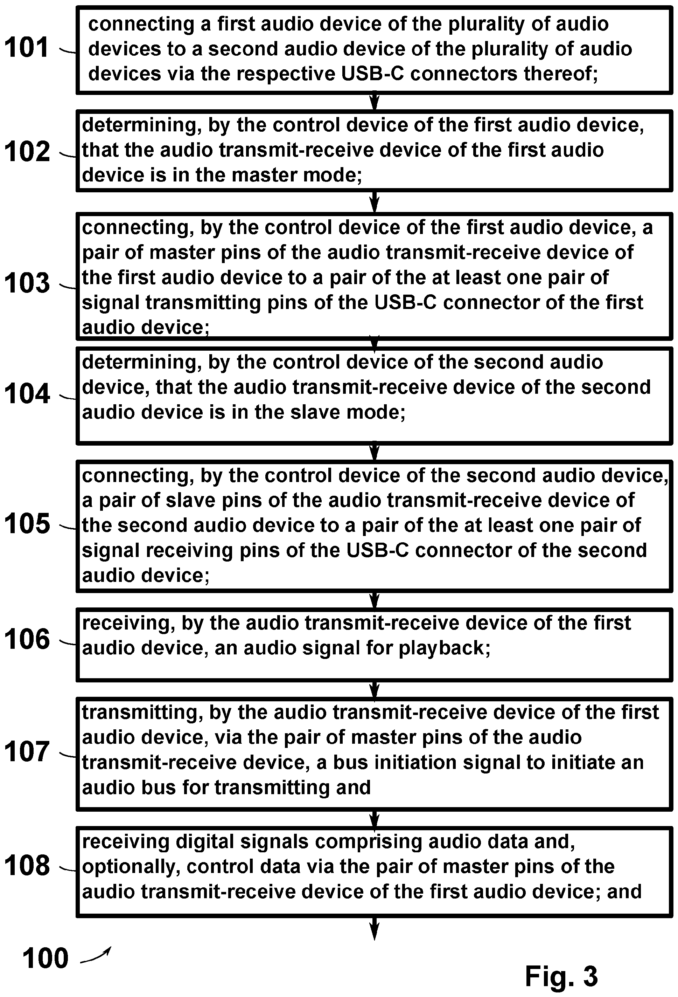

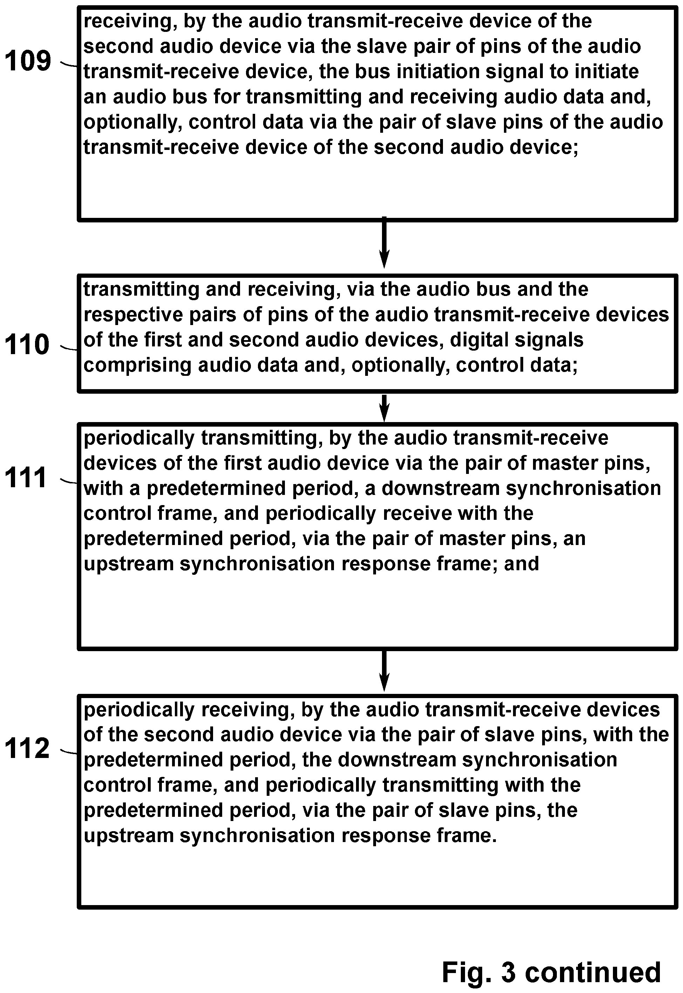

Fig. 3 shows a method 100 of transmitting and receiving audio between a plurality of audio devices, as for example shown in Fig. 1. The method comprises,
connecting 101 a first audio device of the plurality of audio devices to a second audio device of the plurality of audio devices via the respective USB-C connectors thereof;
determining 102, by the control device of the first audio device, that the audio transmit-receive device of the first audio device is in the master mode;
connecting 103, by the control device of the first audio device, a pair of master pins of the audio transmit-receive device of the first audio device to a pair of the at least one pair of signal transmitting pins of the USB-C connector of the first audio device;
determining 104, by the control device of the second audio device, that the audio transmit-receive device of the second audio device is in the slave mode;
connecting 105, by the control device of the second audio device, a pair of slave pins of the audio transmit-receive device of the second audio device to a pair of the at least one pair of signal receiving pins 21 of the USB-C connector of the second audio device;
receiving 106, by the audio transmit-receive device of the first audio device, an audio signal for playback;
transmitting 107, by the audio transmit-receive device of the first audio device, via the pair of master pins of the audio transmit-receive device, a bus initiation signal 41 to initiate an audio bus for transmitting and
receiving 108, digital signals comprising audio data and, optionally, control data via the pair of master pins of the audio transmit-receive device of the first audio device; and
receiving 109, by the audio transmit-receive device of the second audio device via the pair of slave pins of the audio transmit-receive device, the bus initiation signal 41 to initiate an audio bus for transmitting and receiving digital signals comprising audio data and, optionally, control data via the pair of slave pins of the audio transmit-receive device of the second audio device;
transmitting and receiving 110, via the audio bus and the respective pairs of pins of the audio transmit-receive devices of the first and second audio devices, digital signals comprising audio data and, optionally, control data;
periodically transmitting 111, by the audio transmit-receive devices of the first audio device via the pair of master pins, with a predetermined period, a downstream synchronisation control frame 42, and periodically receive with the predetermined period, via the pair of master pins, an upstream synchronisation response frame; and
periodically receiving 112, by the audio transmit-receive devices of the second audio device via the pair of slave pins, with the predetermined period, the downstream synchronisation control frame 42, and periodically transmitting with the predetermined period, via the pair of slave pins, the upstream synchronisation response frame.

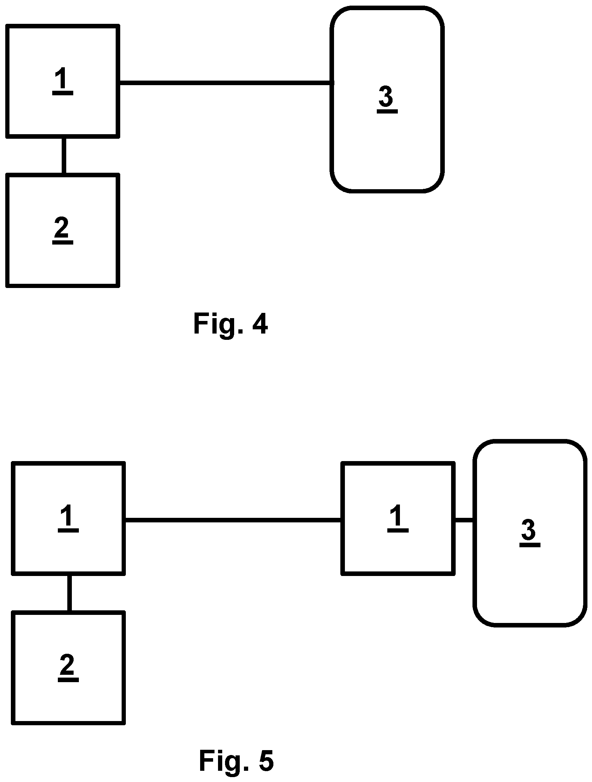

An example for a first use case for the audio device 1 is shown in Fig. 4 and described in the following. The audio device 1 is connected to a user device 3, such as a telephone, a tablet, or a computer via a USB-C cable. After which the audio device 1 establishes itself as a master and transmits to the user device 3 a bus initiation signal 41. After the bus is established the audio device 1 sends synchronization frames to the user device 3 which uses these to time its upstream data slots 52 and upstream synchronisation response frames 51, after which the audio device 1 receives the slots and frames and may use them to play the audio for example on a loudspeaker 2, or control a rhythm lamp. The loudspeaker may be connected to the audio device, for example, via a phone connector cable, a Bluetooth connection, a two wire speaker cable, a HDMI cable, a twisted wire pair, or optical fibre. The loudspeaker 2 may be an active loudspeaker, i.e. comprising an audio amplifier, or may be connected to an output of a potential audio amplifier of the audio device 1. In other embodiments, the loudspeaker 2 may be integrated with the audio device 1 and be connected internally within a housing (not shown), housing the loudspeaker and audio device, by means of wiring.

Another example, here for a second use case for the audio device 1 is described in the following and shown in Fig. 5. The audio device 1 is connected to a user device 3, such as a telephone, a tablet, or a computer via common communication technology, such as for example, Bluetooth, WiFi, or phone connector. The audio device 1 is connected, via a USB-C cable, to a second audio device 1 of the same type. After the audio device 1 receives a bus initiation signal 41 from the second audio device 1, the audio device 1 establishes itself as a slave. After the bus is established the audio device 1 receives synchronization frames from the second audio device 1 and uses these to time its upstream data slot 52 and upstream synchronisation response frame 51. The audio device 1 may receive an audio signal from the user device 3 and sends the audio signal to the second audio device 1 via the audio bus, after which the second audio device 1 receives the data slots and synchronization frames and may use them to play the audio for example on a loudspeaker 2, or control a rhythm lamp. The loudspeaker may be connected to the audio device, for example, via a phone connector cable, a Bluetooth connection, a two wire speaker cable, a HDMI cable, a twisted wire pair, or optical fibre. The loudspeaker 2 may be an active loudspeaker, i.e. comprising an audio amplifier, or may be connected to an output of a potential audio amplifier of the audio device 1. In other embodiments, the loudspeaker 2 may be integrated with the audio device 1 and be connected internally within a housing (not shown), housing the loudspeaker and audio device, by means of wiring.

Although some embodiments have been described and shown in detail, the invention is not restricted to them, but may also be embodied in other ways within the scope of the subject matter defined in the following claims. In particular, it is to be understood that other embodiments may be utilized, and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

### List of reference numerals

- 1: audio device
- 2: loudspeaker
- 3: user device
- 10: audio transmit-receive device
- 11: pair of master pins
- 12: pair of slave pins
- 20: control device
- 21: signal receiving pins
- 22: signal transmitting pins
- 23: signal switching unit
- 24: USB-C port controller
- 30: USB-C connector
- 40: master device
- 41: bus initiation signal
- 42: downstream synchronisation control frame
- 43: downstream data slot
- 44: USB capability exchange signal
- 50: slave device
- 51: upstream synchronisation response frame
- 52: upstream data slot
- 60: predetermined period
- 100: Method
- 101: Method step
- 102: Method step
- 103: Method step
- 104: Method step
- 105: Method step
- 106: Method step
- 107: Method step
- 108: Method step
- 109: Method step
- 110: Method step
- 111: Method step
- 112: Method step
- CC: configuration channel

## Claims

1. An audio device (1), comprising,
a Universal Serial Bus Type-C, USB-C, connector (30) comprising at least one pair of signal transmitting pins (22) and at least one pair of signal receiving pins (21),
an audio transmit-receive device (10) for audio bus communication, the audio transmit-receive device (10) being in a master mode or in a slave mode, wherein the audio transmit-receive device (10), if in the master mode, is configured to
receive an audio signal for playback;
transmit, via a pair of master pins (11) of the audio transmit-receive device (10), a bus initiation signal (41) to initiate an audio bus for transmitting and receiving digital signals comprising audio data and, optionally, control data via the pair of master pins (11);
transmit and receive, via the audio bus and the pair of master pins (11), digital signals comprising audio data and, optionally, control data; and
periodically transmit with a predetermined period (60), via the pair of master pins (11), a downstream synchronisation control frame (42), and periodically receive with the predetermined period (60), via the pair of master pins (11), an upstream synchronisation response frame (51),
and wherein the audio transmit-receive device (10), if in the slave mode, is configured to
receive, via a pair of slave pins (12) of the audio transmit-receive device (10), a bus initiation signal (41) to initiate an audio bus for transmitting and receiving digital signals comprising audio data, and, optionally, control data via the pair of slave pins (12);
transmit and receive, via the audio bus and the pair of slave pins (12), digital signals comprising audio data and, optionally, control data; and
periodically receive with a predetermined period (60), via the pair of slave pins (12), a downstream synchronisation control frame (42), and periodically transmit with the predetermined period (60), via the pair of slave pins (12), an upstream synchronisation response frame (51),
the audio device (1) further comprising a control device (20) operably connected to the USB-C connector (30) and the audio transmit-receive device (10),
wherein the control device (20) is configured to, in response to determining that the audio transmit-receive device (10) is in the master mode, connect a pair of the at least one pair of signal transmitting pins (22) of the USB-C connector (30) to the pair of master pins (11) of the audio transmit-receive device (10), and/or in response to determining that the audio transmit-receive device is in the slave mode, connect a pair of the at least one pair of signal receiving pins (21) of the USB-C connector (30) to the pair of slave pins (12) of the audio transmit-receive device (10), respectively.

2. The audio device (1) according to claim 1, wherein the audio transmit-receive device (10) is configured to transmit and receive the digital signals via a respective single wire pair, such as a single twisted-pair wire.

3. The audio device (1) according to claim 1 or 2, wherein the audio transmit-receive device (10) is an Automotive Audio Bus, A2B, transceiver.

4. The audio device (1) according to any one of the preceding claims, wherein the control device (20) comprises
a USB-C port controller (24), and
a signal switching unit (23) operably connected to the pair of pins (11, 12) of the audio transmit-receive device (10) and to the at least one pair of signal transmitting pins (22) and the at least one pair of signal receiving pins (21), wherein
the USB-C port controller (24) is operably connected to the signal switching unit (23) and the USB-C connector (30) is configured to control signalling through the USB-C connector (30), wherein the USB-C port controller (24) is further configured to receive a signal indicating that the audio transmit-receive device (10) is in the master mode or in the slave mode and, in response to receiving a signal indicating that the audio transmit-receive device (10) is in the master mode, cause the signal switching unit (23) to connect the pair of master pins (11) of the audio transmit-receive device (10) to a pair of pins of the at least one pair of signal transmitting pins (22) of the of the USB-C connector (30) and/or, in response to receiving a signal indicating that the audio transmit-receive device (10) is in the slave mode, cause the signal switching unit (23) to connect the pair of slave pins (12) of the audio transmit-receive device (10) to a pair of the at least one pair of signal receiving pins (21) of the of the USB-C connector (30).

5. The audio device (1) according to claim 4, wherein the at least one pair of signal receiving pins (21) comprises a first pair of signal receiving pins (21) and a second pair of signal receiving pins (21), and wherein the at least one pair of signal transmitting pins (22) comprises a first pair of signal transmitting pins (22) and a second pair of signal transmitting pins (22), wherein
the USB-C port controller (24) is configured to, in response to detecting a connection to a further device via the USB-C connector (30), determine an orientation of the USB-C connector (30) connection, the orientation comprising a first and a second orientation, wherein the USB-C port controller (24) is further configured to:
in response to determining the first orientation, cause the signal switching unit (23) to connect the of pair master pins (11) of the audio transmit-receive device (10) to the first pair of signal transmitting pins (22), in response to receiving a signal indicating that the audio transmit-receive device (10) is in the master mode, and/or connect the pair of slave pins (12) of the audio transmit-receive device (10) to the first pair of signal receiving pins (21), in response to receiving a signal indicating that the audio transmit-receive device (10) is in the slave mode, and
in response to determining the second orientation, cause the signal switching unit (23) to connect the pair of master pins (11) of the audio transmit-receive device (10) to the second pair of signal transmitting pins (22) in response to receiving a signal indicating that the audio transmit-receive device (10) is in the master mode, and/or connect the pair of slave pins (12) of the audio transmit-receive device (10) to the second pair of signal receiving pins (21) in response to receiving a signal indicating that the audio transmit-receive device (10) is in the slave mode.

6. The audio device (1) according to any one of claims 4-5, wherein the USB-C port controller (24) is further configured, in response to determining that no audio is to be transmitted and received by the audio transmit-receive device (10), cause the signal switching unit (23) to set the pins of the audio transmit-receive device and/or the pins of the USB-C connector to a high impedance, Hi-Z, state.

7. The audio device (1) according to any one of the preceding claims, wherein determining that audio is to be transmitted and/or received comprises determining that a further device is connected to the audio device (1) via the USB-C connector (30) and transmitting and/or receiving a handshake signal, indicating that audio is to be transmitted and/or received, via the USB-C connector (30).

8. The audio device (1) according to any one of the preceding claims, wherein the control device (20) is configured to, in response to determining that audio is to be transmitted and/or received, operate in a USB-C Alternate Mode, Alt-Mode.

9. The audio device (1) according to any one of the previous claims, wherein the audio device (1) is any one of an audio playback device, such as a loudspeaker device, an audio streamer device, a television, and an audio interface.

10. The audio device (1) according to any one of the preceding claims, wherein the audio device (1) is configured via the USB-C connector (30) to receive a power signal, providing power supply for operation of the audio device (1).

11. A system comprising a plurality of audio devices (1) according to any one of the preceding claims, the plurality of audio devices comprising a first audio device and at least one second audio device,
wherein the first audio device and the at least one second audio device are connected via the respective USB-C connectors (30) thereof, and
wherein the audio transmit-receive device (10) of the first audio device is configured to operate in the master mode and wherein the audio transmit-receive device (10) of the at least one second audio device is configured to operate in the slave mode.

12. A method (100) of transmitting and receiving audio between a plurality of audio devices according to any one of claims 1-10, comprising:
connecting (101) a first audio device of the plurality of audio devices to a second audio device of the plurality of audio devices via the respective USB-C connectors thereof;
determining, (102) by the control device of the first audio device, that the audio transmit-receive device of the first audio device is in the master mode;
connecting, (103) by the control device of the first audio device, a pair of master pins of the audio transmit-receive device of the first audio device to a pair of the at least one pair of signal transmitting pins of the USB-C connector of the first audio device;
determining, (104) by the control device of the second audio device, that the audio transmit-receive device of the second audio device is in the slave mode;
connecting, (105) by the control device of the second audio device, a pair of slave pins of the audio transmit-receive device of the second audio device to a pair of the at least one pair of signal receiving pins (21) of the USB-C connector of the second audio device;
receiving, (106) by the audio transmit-receive device of the first audio device, an audio signal for playback;
transmitting, (107) by the audio transmit-receive device of the first audio device, via the pair of master pins of the audio transmit-receive device, a bus initiation signal (41) to initiate an audio bus for transmitting and receiving (108) digital signals comprising audio data and, optionally, control data via the pair of master pins of the audio transmit-receive device of the first audio device; and
receiving, (109) by the audio transmit-receive device of the second audio device via the pair of slave pins of the audio transmit-receive device, the bus initiation signal (41) to initiate an audio bus for transmitting and receiving digital signals comprising audio data and, optionally, control data via the pair of slave pins of the audio transmit-receive device of the second audio device;
transmitting and receiving, (110) via the audio bus and the respective pairs of pins of the audio transmit-receive devices of the first and second audio devices, digital signals comprising audio data and, optionally, control data;
periodically transmitting, (111) by the audio transmit-receive devices of the first audio device via the pair of master pins, with a predetermined period, a downstream synchronisation control frame (42), and periodically receive with the predetermined period, via the pair of master pins, an upstream synchronisation response frame; and
periodically receiving, (112) by the audio transmit-receive devices of the second audio device via the pair of slave pins, with the predetermined period, the downstream synchronisation control frame (42), and periodically transmitting with the predetermined period, via the pair of slave pins, the upstream synchronisation response frame.

13. The method of claim 12 further comprising, prior to transmitting and receiving the digital signals, performing a handshake procedure comprising transmitting a handshake signal indicating that audio is to be transmitted and/or received and, in response to receiving the handshake signal, transmitting an acknowledgment signal indicating a confirmation that audio is to be transmitted and/or received.
